# FASCICULE DE BREVET EUROPEEN

(11) **EP 1 980 445 B1**
(45) Date de publication et mention de la délivrance du brevet: **14.07.2010**
(21) Numéro de dépôt: 07290434.5
(22) Date de dépôt: 10.04.2007
(51) Int. Cl.: B60N 3/06

(54) **Repose-pieds réglable en hauteur**
Höhenregulierbare Fußraste
Height-adjustable footrest

(43) Date de publication de la demande: 15.10.2008
(73) Titulaire: CEIT Entreprises, 86200 Loudun (FR)
(72) Inventeur: Sibout, Michel, 86200 Veniers (FR)
(74) Mandataire: Fosse, Danièle

(56) Documents cités:
- EP-A- 1 375 288
- DE-A1- 3 346 754
- DE-C1- 4 129 496
- DE-U1- 9 313 064

## Description

La présente invention concerne un repose-pieds réglable en hauteur, destiné en particulier à équiper le poste de conduite de véhicules tels qu'un véhicule de transport du type train, tramway, métro ou similaire dans lesquels le conducteur change fréquemment.

Dans tous les véhicules de transport en commun, le conducteur est remplacé très régulièrement, jusqu'à quatre fois dans une même journée. Les personnes qui conduisent ces véhicules peuvent être de sexe différent, de taille et corpulence variées allant du 5^{ième} centile au 95^{ième} centile, c'est-à-dire d'une taille de 1 m 50 à 1 m 95. Ainsi, en général au niveau du poste de conduite, on propose un siège réglable à la fois en hauteur et en profondeur. De plus, on prévoit généralement un repose-pieds sur lequel le conducteur peut positionner ses pieds à la fois pour atteindre les pédales de commande généralement prévues sur le repose-pieds ou pour reposer ses pieds et ses jambes dans une position confortable.

Dans ce type de véhicule, le tableau de bord de par la complexité des appareils est de dimensions relativement importantes. Aussi, pour qu'un conducteur de grand gabarit puisse loger ses jambes sous le tableau de bord, il est nécessaire que le repose-pieds prévu soit le plus bas possible. Pour un conducteur de petit gabarit, il est indispensable que le repose-pieds soit également accessible et donc qu'il présente une hauteur appropriée pour que ledit conducteur de petit gabarit puisse accéder lui aussi aux pédales de commande ou reposer ses pieds.

Il est donc nécessaire de prévoir un repose-pieds dont la hauteur peut être réglée pour s'adapter à des conducteurs de taille différente et ce, de façon simple.

On connaît des repose-pieds réglables en hauteur mais dont les moyens de réglage de la hauteur nécessitent une intervention manuelle de l'utilisateur. Ainsi, dans EP 0 727 163, on propose une plaque pour les pieds, montée entre deux côtés pourvus de rainures dans lesquelles sont logeables des broches de fixation de la plaque. Ces rainures sont en forme de demi-cercles superposés les uns aux autres de sorte que la plaque est fixée à des hauteurs différentes en fonction des rainures choisies.

Un tel dispositif permet donc de proposer un réglage en hauteur de la plaque d'appui du repose-pieds toutefois cela doit être effectué manuellement par enlèvement des broches de fixation et remise en place de celles-ci une fois la hauteur choisie. De plus, les possibilités quant au choix de la hauteur restent limitées. Un tel repose-pied n'est donc pas utilisable dans un véhicule où ledit repose-pied doit pouvoir être adapté rapidement lors d'un changement de conducteur et pour des conducteurs de morphologie multiples et variées.

Du document EP 1 375 288 on connaît un repose-pieds, qui montre les caractéristiques du préambule de la revendication 1.

La présente invention a donc pour but de pallier ces inconvénients en proposant un repose-pieds dont la hauteur est facilement réglable d'une personne à l'autre, ce réglage étant en outre réalisé de manière simple et fiable.

A cet effet, l'invention a pour objet un repose-pieds destiné à équiper des véhicules de transport, en particulier au niveau du poste de conduite, du type comprenant une plaque d'appui pour les pieds et un châssis permettant la fixation dudit repose-pieds au plancher du véhicule, caractérisé en ce que ladite plaque d'appui est montée sur le châssis à l'aide de moyens permettant l'entraînement en déplacement de ladite plaque d'appui entre une première position extrême dite basse et une seconde position extrême dite haute, lesdits moyens d'entraînement étant en outre agencés pour permettre le positionnement et le maintien de ladite plaque à la position extrême haute, à la position extrême basse et à une pluralité de positions intermédiaires entre lesdites positions extrêmes, des moyens de commande desdits moyens d'entraînement étant en outre prévus sur le repose-pieds actionnables au pied.

Ainsi, de manière avantageuse la plaque d'appui peut être positionnée simplement par l'action du pied de l'utilisateur sur les moyens de commande et à la hauteur voulue choisie parmi une pluralité de hauteurs possibles entre les deux hauteurs extrêmes.

De préférence, la hauteur extrême basse et la hauteur extrême haute du repose-pieds sont choisies pour s'adapter des hauteurs d'utilisateur grande et petite extrêmes.

Le châssis du repose-pieds est constitué d'une embase servant à la fixation au plancher de la cabine de conduite du véhicule, par exemple, et qui comporte également une paroi verticale.

La plaque d'appui, éventuellement pourvue d'une plaque de recouvrement, est montée sur l'embase à l'aide de moyens permettant son entraînement par rapport à l'embase entre les deux positions extrêmes. Ces moyens sont constitués de deux axes s'étendant verticalement par rapport à l'embase et donc au sol, de moyens de guidage tels que des guides à bille fixés à une extrémité de la plaque d'appui et appropriés pour coulisser le long des axes, et d'un vérin pneumatique ou hydraulique, de préférence un vérin à gaz, fixé articulé sur l'embase et dont la tige est montée articulée à l'extrémité de la plaque d'appui pourvue des moyens de guidage.

La plaque d'appui est de préférence montée sur le châssis de manière à être inclinée depuis les axes vers l'embase, formant une surface d'appui inclinée, dans une position ergonomique de réception des pieds.

Ainsi, le déploiement de la tige du vérin permet d'amener la plaque d'appui vers la position haute, celle-ci par l'intermédiaire des moyens de guidage se déplaçant guidée le long des axes tandis que la rétractation de la tige du vérin dans le cylindre permet d'amener la plaque d'appui, celle-ci toujours par l'intermédiaire des moyens de guidage se déplaçant guidée le long des axes, vers la position basse.

Les moyens de commande des moyens d'entraînement, et plus particulièrement du vérin, sont constitués d'un bouton-poussoir de commande ménagé à l'extrémité de la tige du vérin et d'une pédale de commande ménagée en partie haute du repose-pieds, cette pédale étant conformée pour appuyer sur le bouton poussoir de commande lorsqu'un utilisateur exerce un appui dessus à l'aide du pied.

Ainsi, lorsqu'un utilisateur exerce une pression sur la pédale de commande à l'aide du pied, celle-ci transmet la pression exercée sur le bouton poussoir du vérin déclenchant ainsi son actionnement. Une fois, le vérin actionné celui-ci tend vers le déploiement de la tige de sorte que, pour remonter le repose-pieds il suffit à l'utilisateur de laisser agir le vérin jusqu'à la hauteur souhaitée puis de relâcher la pédale de commande pour bloquer le repose-pieds à la hauteur choisie. Si au contraire, l'utilisateur veut abaisser le repose-pieds, il doit exercer avec son ou ses pieds une poussée supérieure à celle exercée par le vérin pour pouvoir abaisser la plaque d'appui jusqu'à la hauteur voulue. Il suffit ensuite là encore de relâcher la pression sur la pédale de commande pour bloquer et maintenir le repose-pieds à la hauteur choisie.

Le repose-pieds selon l'invention est donc réglable en hauteur sans assistance électromécanique, commandé par l'utilisateur à l'aide d'une commande directement accessible au pied et située sur ledit repose-pieds.

Le repose-pieds selon l'invention comporte en outre des moyens de verrouillage du positionnement et du maintien de la plaque d'appui à la hauteur choisie.

Ces moyens sont constitués d'un pignon denté monté sur la plaque d'appui et coopérant avec une crémaillère fixée sur la paroi verticale de l'embase, ledit pignon denté étant solidaire en rotation d'une roue dentée dans laquelle un doigt de blocage est maintenu en prise sous l'effet d'un moyen de rappel élastique, ladite roue dentée étant ainsi bloquée en rotation de sorte que le pignon denté est également bloqué en rotation pour éviter à la plaque d'appui de descendre en position basse si le vérin cesse son effet, ledit doigt de blocage étant désengageable de la roue dentée lors de l'actionnement de la pédale de commande sous l'effet de moyens appropriés. Lesdits moyens peuvent être constitués d'une biellette en liaison entre un axe de la pédale de commande et une lumière du doigt de blocage, de sorte que, lors de l'actionnement de la pédale de commande par pression du pied de l'utilisateur, la biellette tire le doigt de blocage contre l'effet du moyen de rappel élastique et le désengage de la roue dentée.

Ainsi, de manière avantageuse, quand l'utilisateur appuie sur la pédale de commande dite également de déverrouillage, il libère le vérin à gaz et les moyens de verrouillage de sécurité.

Un repose-pieds selon l'invention peut être avantageusement utilisé pour le conducteur d'un véhicule de transport et il peut comporter également des pédales de commande du véhicule. Toutefois, il peut également être utilisé en tant que repose-pieds réglable en hauteur, destiné à équiper des sièges de passagers d'un tel véhicule.

On décrira maintenant l'invention plus en détail en référence au dessin dans lequel :
La figure 1 représente une vue en coupe d'un repose-pieds selon l'invention ;
Les figures 2a, 2b et 2c représentent respectivement une vue en coupe d'un repose-pieds selon l'invention, la coupe étant effectuée à des endroits différents du repose-pieds ;

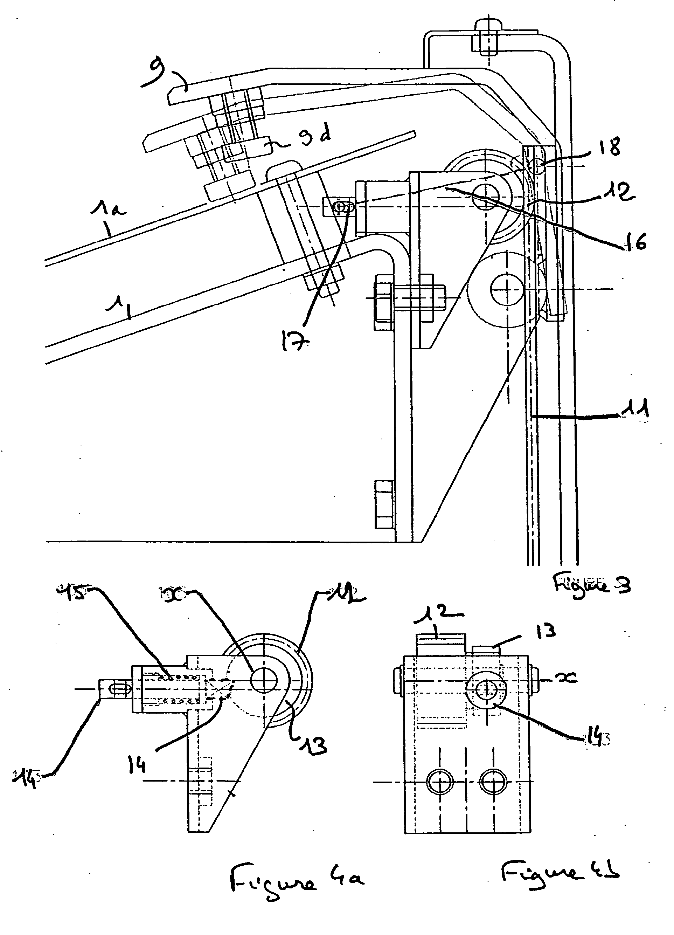

La figure 3 représente une vue agrandie de la partie supérieure de la figure 2b, et
Les figures 4a et 4b représentent respectivement les moyens de verrouillage selon une vue latérale et une vue arrière.

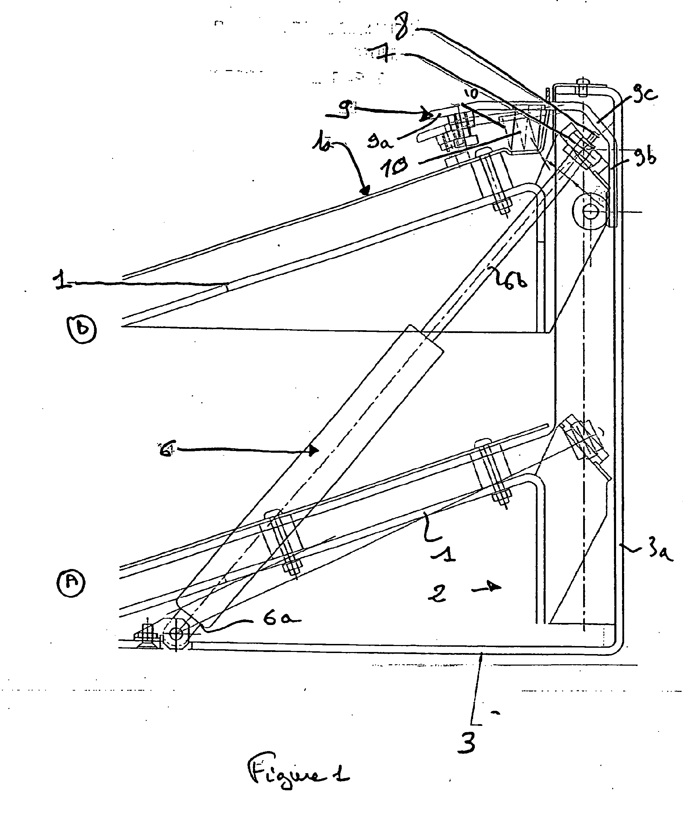

Comme on peut le voir à la figure 1, le repose-pieds objet de l'invention comprend une plaque d'appui 1 pour les pieds et un châssis 2 permettant la fixation dudit repose-pieds au plancher du véhicule.

Ainsi, le châssis 2 comporte une embase 3 qui est fixée au plancher de la cabine de conduite du véhicule. Cette embase 3 comporte également une paroi verticale 3a.

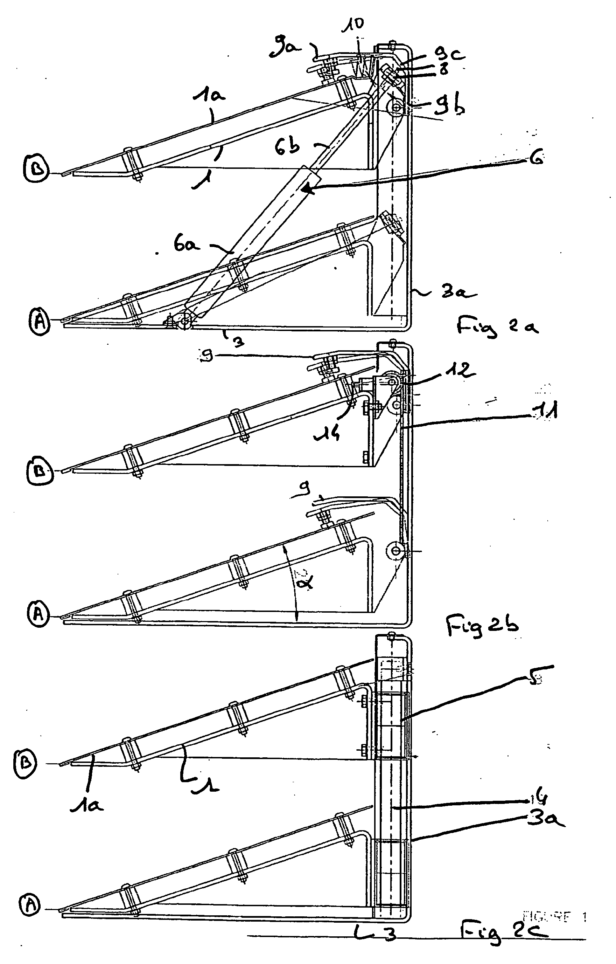

La plaque d'appui 1 est montée sur le châssis 2 à l'aide de moyens permettant l'entraînement en déplacement de ladite plaque d'appui 1 par rapport à l'embase entre une première position extrême dite basse A et une seconde position extrême dite haute B toutes deux représentées à la figure 1 et aux figures 2a, 2b et 2c. Ces moyens d'entraînement sont constitués en partie de deux axes verticaux 4 s'étendant depuis l'embase 3 et le long duquel sont montés coulissants des moyens de guidage tels que des guides à bille 5 fixés à l'extrémité de la plaque d'appui 1. La plaque d'appui 1 comporte une plaque de recouvrement 1a assurant une protection complémentaire. La plaque d'appui 1 et 1a plaque de recouvrement 1a sont montées ainsi dans un plan incliné (angle α) depuis les axes 4 vers l'embase 3 de manière à favoriser le positionnement ergonomique des pieds du conducteurs sur ledit repose-pieds et peuvent comporter des pédales de commande pour la conduite du véhicule par exemple (non représenté). Cette inclinaison est toujours la même quelle que soit la hauteur de la plaque d'appui.

Ainsi, les guides à billes 5 permettent l'entraînement guidé de la plaque d'appui 1 le long des axes 4 entre la position extrême haute B et la position extrême basse A. Les moyens d'entraînement comportent en outre des moyens de commande de cet entraînement pour permettre le positionnement et le maintien de ladite plaque 1 à la position extrême haute B, à la position extrême basse A et à une pluralité de positions intermédiaires entre lesdites positions extrêmes. Ces moyens de commande sont constitués d'un vérin à gaz 6 dont la chape 6a est montée articulée sur l'embase 3 et la tige 6b est montée articulée à son extrémité sous la plaque d'appui 1, par exemple à l'aide d'une rotule 7, logée sensiblement au niveau de l'extrémité de la plaque d'appui 1 qui coulisse le long des axes 4. Ainsi, l'actionnement du vérin 6 qui peut pivoter par rapport à l'embase 3 permet de commander le coulissement de la plaque 1 le long des axes 4 par l'intermédiaire des guides à bille 5 entre la position extrême haute B dans laquelle la tige 6b du vérin est totalement déployée et la position extrême basse A dans laquelle la tige 6b est non déployée.

Le vérin à gaz 6 présente une grande fiabilité de sorte qu'il permet le coulissement lorsqu'il est actionné et le maintien en position lorsque cesse son actionnement.

A cet effet, un organe de commande dudit vérin tel qu'un bouton poussoir 8 de commande est ménagé à l'extrémité de celui-ci, ce bouton de commande 8 permettant d'actionner le vérin 6 lorsqu'on appuie dessus. De préférence, on prévoit alors une pédale de commande 9 dudit bouton de commande 8.

Cette pédale 9 est logée à l'extrémité de la plaque d'appui 1, de la tige 6b du vérin 6 et se positionne au-dessus de la plaque de recouvrement 1a de manière à être accessible à l'utilisateur qui peut ainsi l'actionner à l'aide du pied. Cette pédale 9 présente sensiblement une section transversale en U, une branche 9a du U venant sur la plaque de recouvrement la pour constituer la partie d'actionnement de la pédale 9 tandis que l'autre extrémité 9b du U est articulée sur le châssis et que la base 9c du U est en regard du bouton de commande 8.

Un moyen de rappel élastique tel qu'un ressort de rappel 10 est logé entre la plaque de recouvrement 1a et la pédale de commande 9 de sorte que, lorsque l'utilisateur appuie sur la partie d'actionnement de la pédale 9, le ressort 10 se comprime et la base 9c du U vient en appui sur le bouton de commande 8 déclenchant alors l'actionnement du vérin 6. La partie d'actionnement 9a comporte en outre une butée 9d pour limiter la course d'actionnement.

Il est alors possible soit d'exercer une poussée suffisante pour contrecarrer la poussée du vérin 6 et abaisser la plaque d'appui 1 jusqu'à la position voulue soit au contraire de laisser remonter la plaque d'appui 1 sous l'effet du vérin jusqu'à la position voulue. Dès la position souhaitée atteinte, on relâche la pédale de commande 9 et l'actionnement du vérin 6 cesse maintenant la plaque d'appui 1 à la position déterminée par l'utilisateur.

La poussée exercée sur la plaque d'appui 1 peut être exercée avec le pied qui actionne la pédale de commande ou avec le deuxième pied de l'utilisateur.

Ainsi, le repose-pied selon l'invention peut être commandé avec un seul pied.

De manière à éviter les risques de mauvais fonctionnement du vérin 6, liés à l'usure prématurée de ce dernier, du fait de la corrosion ou des poussières en quantité, de chocs qui pourrait endommager la tige 6b, le repose pieds comporte en outre des moyens de verrouillage du positionnement du repose pieds. Ces moyens de verrouillage sont agencés pour bloquer en position le repose pieds à la hauteur choisie par l'utilisateur sans que le vérin 6 soit sollicité en permanence par le poids du conducteur.

Ces moyens de verrouillage sont constitués par une crémaillère 11 fixée de manière rigide sur la paroi verticale de l'embase 3. Un pignon denté 12 est prévu pour circuler et coopérer avec cette crémaillère, ledit pignon 12 étant monté libre en rotation autour d'un axe x monté sur un support fixé à la plaque d'appui 1. Une roue dentée 13 solidaire dudit pignon denté 12 coopère avec un doigt de blocage 14. Ce doigt de blocage 14 est ménagé pour venir bloquer les dents de ladite roue dentée 13 de sorte à empêcher la rotation dudit pignon denté 12 dans le sens inverse des aiguilles d'une montre, c'est-à-dire pour empêcher la plaque d'appui 1 de descendre en position extrême basse si le vérin 6 cède.

Le doigt de blocage 14 est maintenu en prise sur la roue dentée 13 à l'aide d'un moyen de rappel élastique tel qu'un ressort 15. Ce ressort 15 est compressé pour autoriser désengager le doigt de blocage 14 de la roue dentée 13 le désengagement étant commandé par une biellette 16 qui fait la liaison entre une lumière 17 ménagée sur le doigt 14 et un axe 18 situé sur la pédale de commande 9.

Ainsi, non seulement le repose pieds selon l'invention permet de choisir facilement par simple pression sur la pédale de commande 9 la hauteur voulue par l'utilisateur mais il offre en outre un positionnement sûr.

Ainsi, un utilisateur tel qu'un conducteur de tramway, arrive à son poste de conduite et s'installe. Il règle d'abord la position de son siège en hauteur et profondeur, puis il cale ensuite ses pieds sur le repose pieds.

Si le repose pieds est trop bas, le conducteur appuie sur la pédale de commande 9 qui agit simultanément sur le bouton poussoir 8 de commande du vérin 6 pour actionner le vérin 6 qui pousse alors la plaque d'appui vers le haut et sur la biellette 16 qui désengage le doigt de blocage 14 de la roue dentée 13 et libère donc la rotation du pignon denté 12 le long de la crémaillère 11. Quand le repose pieds est à la hauteur voulue par l'utilisateur, celui-ci appuie avec son pied pour faire équilibre avec l'effort du vérin 6 et retire son pied de la pédale de commande 9. Le doigt de blocage 14 est alors ramené en position de prise avec la couronne dentée 13 ce qui bloque le pignon denté 12 en rotation.

Si le repose pieds est trop haut, le conducteur appuie sur la pédale de commande 9 ce qui actionne le bouton de commande 8 du vérin 6 et désengage le doigt de blocage 14 de la couronne dentée 13 libérant ainsi le pignon denté 12 en rotation. L'utilisateur doit alors exercer une poussée supérieure à celle du vérin 6 pour contrebalancer la poussée du vérin 6 et permettre l'abaissement de la plaque d'appui 1. Quand la plaque d'appui 1 est à la bonne hauteur, l'utilisateur relâche la pédale de commande 9, le vérin 6 n'est donc plus actionné et se bloque tandis que le doigt de blocage 14 se réengage sur la couronne dentée 13 bloquant le pignon 12 en rotation.

Ainsi, comme on peut le voir, le repose pieds selon l'invention permet avantageusement de sélectionner de manière simple et efficace la hauteur d'utilisation.

Un tel repose pieds sert donc avantageusement pour des postes de conduite de véhicules de transport mais il est bien entendu possible d'envisager son utilisation pour les voyageurs et dans tout autre type de véhicule où il pourrait être utile.

## Revendications

1. Repose-pieds destiné à équiper des véhicules de transport, en particulier an niveau du poste de conduite, du type comprenant une plaque d'appui (1) pour les pieds et un châssis (2) permettant la fixation dudit repose-pieds au plancher du véhicule, ladite plaque d'appui (1) étant montée sur le châssis (2) à l'aide de moyens permettant l'entraînement en déplacement de ladite plaque d'appui (1) entre une première position extrême dite basse et une seconde position extrême dite haute, lesdits moyens d'entraînement étant en outre agencés pour permettre le positionnement et le maintien de ladite plaque (1) à la position extrême haute, à la position extrême basse et à une pluralité de positions intermédiaires entre lesdites positions extrêmes, des moyens de commande desdits moyens d'entraînement étant en outre prévus sur le repose-pieds, actionnables au pied,
**caractérisé en ce qu'**il comporte en outre des moyens de verrouillage du positionnement et du maintien de la plaque d'appui (1) à la hauteur choisie constitués d"un pignon denté (12) monté sur la plaque d'appui (1) et coopérant avec une crémaillère (11) fixée sur la paroi verticale (3a) de l'embase (3), ledit pignon denté (12) étant solidaire en rotation d'une roue dentée (13) dans laquelle un doigt de blocage (14) est maintenu en prise sous l'effet d'un moyen de rappel élastique (15), ladite roue dentée (13) étant ainsi bloquée en rotation de sorte que le pignon denté (12) est également bloqué en rotation, ledit doigt de blocage (14) étant désengageable de la roue dentée (13) lors de l'actionnement de la pédale de commande (9) sous l'effet de moyens appropriés.

2. Repose-pieds selon la revendication 1,
**caractérisé en ce que** le châssis (2) du repose-pieds est constitué d'une embase (3) servant à la fixation au plancher de la cabine de conduite et qui comporte également une paroi verticale (3a).

3. Repose-pieds selon la revendication 2,
**caractérisé en ce que** les moyens permettant l'entraînement de la plaque d'appui (1) entre les deux positions extrêmes sont constitués de deux axes (4) s'étendant verticalement par rapport à l'embase (3), de moyens de guidage tels que de guides à bille (5) fixés à une extrémité de la plaque d'appui (1) et appropriés pour coulisser le long des axes (4), et d'un vérin (6) pneumatique ou hydraulique, de préférence un vérin à gaz, fixé articulé sur l'embase (3) et dont la tige (6b) est montée articulée à l'extrémité de la plaque d'appui (1) pourvue des moyens de guidage (5).

4. Repose-pieds selon la revendication 3,
**caractérisé en ce que** les moyens de commande des moyens d'entraînement, est plus particulièrement du vérin (6), sont constitués d'un bouton-poussoir de commande (8) ménagé à l'extrémité de la tige (6) du vérin (6) et d'une pédale de commande (9) ménagée en partie haute du repose-pieds, cette pédale (9) étant conformée pour appuyer sur le bouton poussoir de commande (8) lorsqu'un utilisateur exerce un appui dessus à l'aide du pied.

5. Repose-pieds selon la revendication 4,
**caraciérisé en ce que** la pédale (9) présente sensiblement une section transversale en U, une branche (9a) du U venant sur la plaque d'appui (1) pour constituer la partie d'actionnement de la pédale (9) tandis que l'autre extrémité (9b) du U est articulée sur le châssis et que la base (9c) du U est en regard du bouton de commande (8).

6. Repose-pieds selon la revendication 5,
**caractérisé en ce qu'**un moyen de rappel élastique tel qu'un ressort de rappel (10) est logé entre la plaque d'appui (1) et la pédale de commande (9).

7. Repose-picds selon l'une quelconque des revendications précédentes,
**caractérisé en ce que** lesdits moyens sont constitués d'une biellette (16) en liaison entre un axe (18) de la pédale de commande (9) et une lumière (17) du doigt de blocage (14).

8. Repose-pieds selon l'une des revendications précédentes,
**caractérisé en ce qu'**il comporte également des pédales de commande du véhicule.

## Claims

1. Footrest intended to outfit transport vehicles, in particular at the driver's post, of the type comprising a treading plate (1) for the feet and a frame (2) allowing said footrest to be fastened to the floor of the vehicle, said treading plate (1) is mounted on the frame (2) using means allowing for the driving in displacement of said treading plate (1) between a first extreme low position and a second extreme high position, said means of driving furthermore arranged to allow for the positioning and the maintaining of said plate (1) at the extreme high position, at the extreme low position and at a plurality of intermediary positions between said extreme positions, means of controlling of said means of driving furthermore provided on the footrest, which can be actuated with a foot **characterised in that** it further comprises means for locking the positioning and the maintaining of the treading plate (1) at the selected height and **in that** these means are comprised of a toothed gear (12) mounted on the treading plate (1) and cooperating with a control rod (11) fixed on the vertical wall (3a) of the base (3), said toothed gear (12) being attached in rotation with a toothed wheel (13) wherein a locking pin (14) is maintained in mesh under the effect of a means of elastic return (15), said toothed wheel (13) being as such locked in rotation in such a way that the toothed gear (12) is also locked in rotation, said locking pin (14) able to be disengaged from the toothed wheel (13) during the actuating of the control pedal (9) under the effect of appropriate means.

2. Footrest according to claim 1,
**characterised in that** the frame (2) of the footrest is comprised of a base (3) used for fastening the driver's cab to the floor and which further comprises a vertical wall (3a).

3. Footrest according to claim 2,
**characterised in that** the means allowing for the driving of the treading plate (1) between the two extreme positions are comprised of two axes (4) extending vertically in relation to the base (3), of means for guiding such as spherical guides (5) fixed at one end of the treading plate (1) and appropriate for sliding along the axes (4), and of a pneumatic or hydraulic cylinder (6), more preferably a gas cylinder, fixed articulated around the base (3) and of which the rod (6b) is mounted articulating at the end of the treading plate (1) provided with means of guiding (5).

4. Footrest according to claim 3,
**characterised in that** the means of controlling the means of driving, and more particularly of the cylinder (6), are comprised of a control pushbutton (8) arranged at the end of the rod (6) of the cylinder (6) and of a control pedal (9) arranged in the upper portion of the footrest, this pedal (9) being shaped in order to press on the control pushbutton (8) when a user exerts pressure thereon using a foot.

5. Footrest according to claim 4,
**characterised in that** the pedal (9) substantially has a U-shaped transversal section, with a branch (9a) of the U coming onto the treading plate (1) in order to form the actuating portion of the pedal (9) while the other end (9b) of the U is articulated around the frame and that the base (9c) of the U is across from the control button (8).

6. Footrest according to claim 5,
**characterised in that** a means of elastic return such as a return spring (10) is housed between the treading plate (1) and the control pedal (9).

7. Footrest according to one of the preceding claims,
**characterised in that** said means are comprised of a connecting rod (16) in liaison between an axis (18) of the control pedal (9) and a hole (17) of the locking pin (14).

8. Footrest according to one of the preceding claims,
**characterised in that** it further comprises control pedals of the vehicle.

## Patentansprüche

1. Fußstütze, die dazu gedacht ist, Transportfahrzeuge, insbesondere am Führerstand, auszustatten, von der Art umfassend eine Stützplatte (1) für die Füße und ein Gestell (2), das die Befestigung der Fußstütze am Boden des Fahrzeugs ermöglicht, die Stützplatte (1) an dem Gestell (2) über Mittel angebracht ist, die einen Bewegungsantrieb der Stützplatte (1) zwischen einer ersten so genannten tiefen Endposition und einer zweiten so genannten hohen Endposition ermöglichen, wobei die Antriebsmittel ferner angeordnet sind, um das Positionierten und Halten der Platte (1) in der hohen Endposition, in der tiefen Endposition und in einer Vielzahl von Zwischenpositionen zwischen den Endpositionen zu ermöglichen, wobei ferner Steuermittel der Antriebsmittel auf der Fußstütze bereitgestellt werden, die mit dem Fuß zu betätigen sind **dadurch gekennzeichnet, dass** sie ferner Mittel zum Verriegeln des Positionierens und des Haftens der Stützplatte (1) auf der gewählten Höhe umfasst und dass diese Mittel aus einem Zahnritzel (12) bestehen, das auf der Stützplatte (1) angebracht ist und mit einer Zahnstange (11) zusammenwirkt, die an der senkrechten Wand (3a) der Grundplatte (3) befestigt ist, wobei das Zahnritzel (12) mit einem Zahnrad (13) drehfest verbunden ist, in dem ein Blockierungszapfen (14) unter der Einwirkung eines elastischen Rückstellmittels (15) in Eingriff gehalten wird, wobei das Zahnrad (13) somit in der Drehung blockiert ist, so dass das Zahnritzel (12) ebenfalls in der Drehung blockiert ist, wobei der Blockierungszapfen (14) aus dem Zahnrad (13) lösbar ist, wenn das Steuerpedal (9) unter der Einwirkung von geeigneten Mitteln betätigt wird.

2. Fußstütze nach Anspruch 1,
**dadurch gekennzeichnet, dass** das Gestell (2) der Fußstütze aus einer Grundplatte (3) besteht, die zur Befestigung am Boden der Fahrerkabine dient und die auch eine senkrechte Wand (3a) umfasst.

3. Fußstütze nach Anspruch 2,
**dadurch gekennzeichnet, dass** die Mittel, welche den Antrieb der Stützplatte (1) zwischen den beiden Endpositionen ermöglichen, aus zwei Achsen (4), die sich im Verhältnis zur Grundplatte (3) senkrecht erstrecken, aus Führungsmitteln, wie Kugelführungen (5), die an einem Ende der Stützplatte (1) befestigt sind und dazu geeignet sind, um an den Achsen (4) entlang zu gleiten, und aus einem Druckluft- oder HydraulikZylinder (6), bevorzugt einem Gaszylinder, der gelenkig an der Grundplatte (3) befestigt ist und dessen Stange (6b) gelenkig am Ende der Stützplatte (1) angebracht ist, die mit den Führungsmitteln (5) versehen ist, bestehen.

4. Fußstütze nach Anspruch 3,
**dadurch gekennzeichnet, dass** die Steuermittel der Antriebsmittel, und insbesondere des Zylinders (6), aus einem Steuerdruckknopf (8), der am Ende der Stange (6) des Zylinders (6) vorgesehen ist, und aus einem Steuerpedal (9), das oben an der Fußstütze vorgesehen ist, bestehen, wobei dieses Pedal (9) ausgestaltet ist, um auf den Steuerdruckknopf (8) zu drücken, wenn ein Benutzer mit seinem Fuß einen Druck darauf ausübt.

5. Fußstütze nach Anspruch 4,
**dadurch gekennzeichnet, dass** das Pedal (9) im Wesentlichen einen U-förmigen Querschnitt aufweist, wobei ein Schenkel (9a) des U auf der Stützplatte (1) zu liegen kommt, um den Betätigungsteil des Pedals (9) zu bilden, während das andere Ende (9b) des U an dem Gestell angelenkt ist und der Bogen (9c) des U sich dem Steuerknopf (8) gegenüber befindet.

6. Fußstütze nach Anspruch 5,
**dadurch gekennzeichnet, dass** ein elastisches Rückstellmittel, wie etwa eine Rückstellfeder (10), zwischen der Stützplatte (1) und dem Steuerpedal (9) aufgenommen ist.

7. Fußstütze nach einem der vorhergehenden Ansprüche,
**dadurch gekennzeichnet, dass** die Mittel aus einem Schwingarm (16) in Verbindung zwischen einer Achse (18) des Steuerpedals (9) und einer Öffnung (17) des Blockierungszapfens (14) bestehen.

8. Fußstütze nach einem der vorhergehenden Ansprüche,
**dadurch gekennzeichnet, dass** sie auch Steuerpedale des Fahrzeugs umfasst.
